# EUROPEAN PATENT SPECIFICATION

(11) **EP 0 413 336 B1**
(45) Date of publication and mention of the grant of the patent: **14.05.1997**
(21) Application number: 90115711.5
(22) Date of filing: 16.08.1990
(51) Int. Cl.: H04N 1/40, H04N 1/00

(54) **Facsimile communication apparatus**
Faksimileübertragungsgerät
Appareil de communication fac-similé

(30) Priority: 17.08.1989 JP 212168/89
(43) Date of publication of application: 20.02.1991
(73) Proprietor: SHARP KABUSHIKI KAISHA, Osaka 545 (JP)
(72) Inventor: Shimonaga, Sadaaki, Nara-shi, Nara-ken (JP)
(74) Representative: Müller, Frithjof E., Dipl.-Ing.

(56) References cited:
- PATENT ABSTRACTS OF JAPAN vol. 13, no. 192 (E-753)9 May 1989 & JP-A-1 013 866 (TOSHIBA CORPORATION) 18 January 1989
- PATENT ABSTRACTS OF JAPAN vol. 8, no. 285 (E-287)26 December 1984 & JP-A-59 151 566 (TOSHIBA K.K.) 30 August 1984

## Description

The present invention relates to a facsimile communication apparatus in accordance with the precharacterizing part of claim 1. Such a facsimile communication apparatus is known from PATENT ABSTRACTS OF JAPAN Vol. 13, No. 192 (E-753) May 1989 & JP-A-1 013 866 (TOSHIBA CORPORATION) 18 January 1989.

A similar facsimile communication apparatus is disclosed in PATENT ABSTRACTS OF JAPAN Vol. 8, No. 285 (E-287) Dec. 1984 & JP-A-59 151 566 (TOSHIBA K.K.) 30 August 1984.

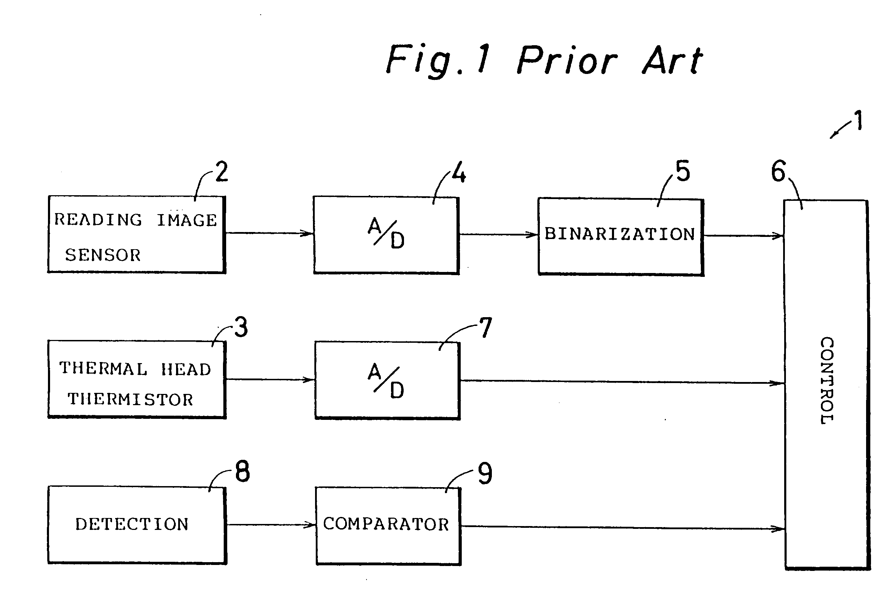

Fig. 1 is a block diagram showing the basic construction of another typical facsimile communication apparatus of conventional type (hereinafter abbreviated as facsimile apparatus) 1. With reference to Fig. 1, the facsimile apparatus 1 is equipped with a reading image sensor which optically reads the document to be transmitted and a thermal head thermistor 3 which is installed on the thermal head, which takes thermal records on the recording paper based on the signals received from the telephone network. and controls the printing density by detecting the temperature, for example, of the thermal head.

The image signal of analog quantity from the reading image sensor 2 is inputted in the controller 6 which controls the motion of the facsimile apparatus 1 through the analog/digital converter (hereinafter abbreviated as A/D converter) 4 and the binarization circuit for reading data 5.

The temperature signal of analog quantity from the thermal head thermistor 3 is inputted in the controller 6 through the A/D converter 7. The facsimile apparatus 1 is provided with detecting means 8 including a plural number of optical or mechanical sensors for detecting the presence or not of loading of a document to be transmitted or the presence or not of a thermal recording paper respectively, and their outputs are inputted in the controller 6 through a comparator 9 intended for recognizing significant detecting signals.

The facsimile apparatus 1 uses many circuits for leading analog signals such as the reading image sensor 2, the thermal head thermistor 3, etc. and A/D converters 4, 7, etc. were used for each of those circuits. Consequently, it contains a comparatively large number of parts for processing analog signals and such analog signal processing circuit can hardly be integrated unlike a circuit for processing digital signals, thus leaving a problem of impossibility of miniaturization of the apparatus. Moreover, as shown in Fig. 1, another problem is that the necessity of using a plural number of A/D converters 4, 7 increases the number of parts used and the manufacturing cost.

Therefore, in the two above-mentioned PATENT ABSTRACTS OF JAPAN, facsimile apparatuses are disclosed having a single analog/digital conversion circuit to which the output of several units of said apparatuses are selectively supplied in a sequential order. The time periods during which each unit is selectively connected to said single A/D conversion circuit are equal to each other.

The purpose of the present invention is also to provide a facsimile communication apparatus, which likewise is realizable in compact size by reducing the number of parts used, but which has a structure and operation both different from the prior art apparatuses.

The above object is, according to the invention, solved by a facsimile communication apparatus specified in claim 1.

Depending claims 2 to 4 are each specifying advantageous developments thereof.

The invention as well as its characteristics and advantages will become more apparent from the detailed description hereunder and the drawings.
Fig. 1 is a block diagram showing the basic construction of a typical facsimile communication apparatus 1 of conventional type,
Fig. 2 is a block diagram showing the construction of the facsimile communication apparatus 11 which is an example of embodiment of the invention,
Fig. 3 is a block diagram representing the entire construction of the facsimile communication apparatus 11, and
Fig. 4 is a time chart explaining the motion of this example of embodiment.

### DETAILED DESCRIPTION OF THE PREFERRED EMBODIMENT

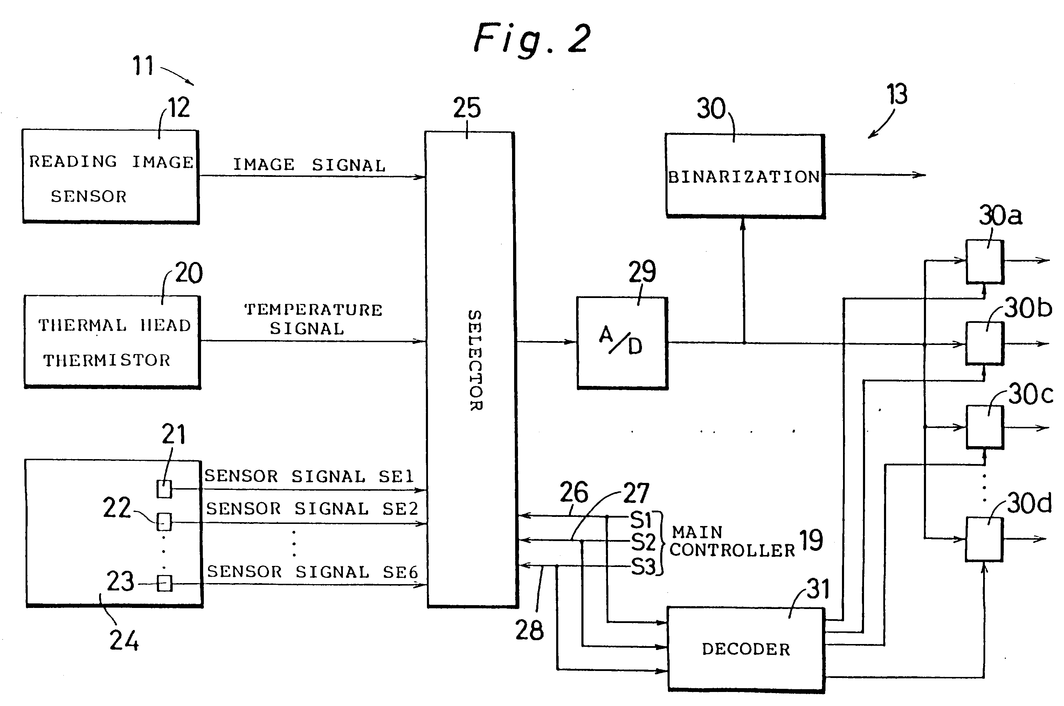

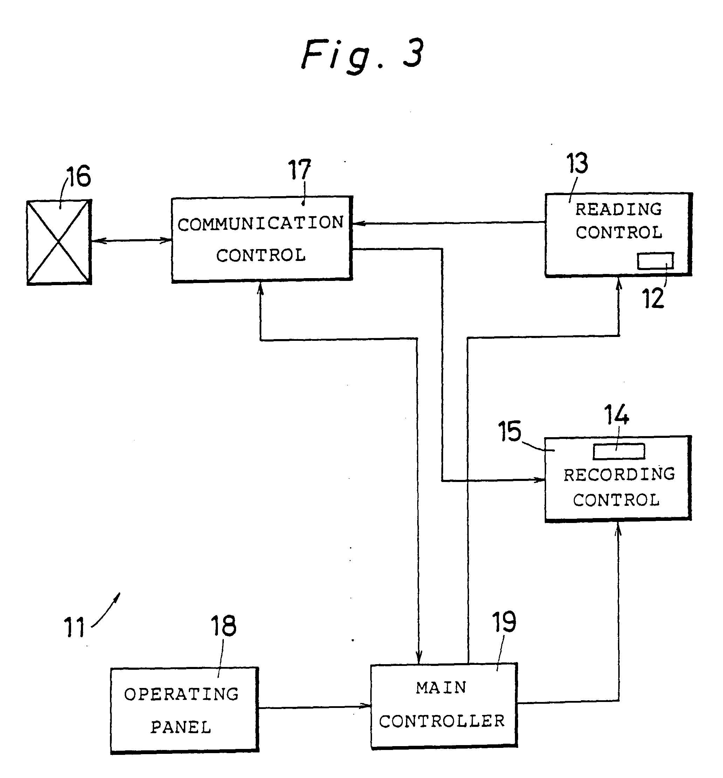

The preferred embodiment of this invention is described hereunder by referring to the following drawings: Fig. 2 is a block diagram showing the construction of the facsimile communication apparatus 11 which is an example of the invention. Fig. 3 is a block diagram representing the entire construction of the facsimile communication apparatus 11.

With reference to those drawings, the facsimile apparatus 11 is constructed by comprising a reading control unit 13 provided with a reading image sensor 12 which is reading means constituted by a charge coupled device (CCD), for example, which optically reads the document to be transmitted, a recording control unit 15 provided with a thermal head 14 which is recording means for making thermal records, for example, on the recording paper which is a recording medium based on the image data received, a communication control unit 17 for making communication of various data and signals with the telephone circuit 16, an operating panel 18 realized by various switches for the purpose of inputting control data, etc. in the facsimile apparatus 11, and a main controller 19 for controlling the motion or operation of the entire facsimile apparatus 11.

The reading control unit 13 comprises the construction indicated in Fig. 2 and includes a reading image sensor 12 and a thermal head thermistor 20 for taking out temperature signals of analog quantity by detecting the temperature of the thermal head 14. It is also provided with optical detecting means 24 such as document loading sensor 21 for detecting the presence or not of the document to be transmitted, recording paper sensor 22 for detecting the presence or not of the recording paper for thermal printing by thermal head 14, etc. as well as detecting means 24 including so-called limit switches such as closing sensor 23, etc. for detecting the closing state or not of a part of the housing (not illustrated) of the facsimile apparatus 11 which is opened at the time of replacement or supplementation of the recording paper, for example.

The reading control unit 13 comprises a selector 25 which is selective connection means in which the analog signals from the reading image sensor 12, the thermal head thermistor 20 and the detecting means 24 are inputted respectively. In the selector 25, selective signals S1, S2, S3 of a plural number of bits or 3 bits for example are inputted from the main controller 19 through the control lines 26, 27, 28 as described later, and any one of the sensors included in the reading image sensor 12, the thermal head thermistor 20 and the detecting means 24 is selected successively by time division by a combination of selective signals S1 to S3.

The analog signals taken out from the selector 25 are inputted in the A/D converter 29 which is analog/digital conversion means and converted into digital signals. The output of the A/D converter 29 is outputted at the communication control unit 17, for example, through the binarization circuit for reading data 30 in the case where the analog signals selected by the selector 25 are image signals from the reading image sensor 12, and submitted to various signal processings for outputting in the telephone network 16.

On the other hand, in the case where the analog signals selected by the selector 25 are temperature signals from the thermal head thermistor 20 or sensor signals SE1 to SE6 from various sensors constituting the detecting means 24, those signals are outputted after being latched by the latch circuits 30a, 30b, 30c, 30d provided for those signals. Those latch circuits 30 latch the output of the A/D converter 29 by selecting one of the selective signals S1 to S3 with the decoder 31 in which such selective signals are inputted.

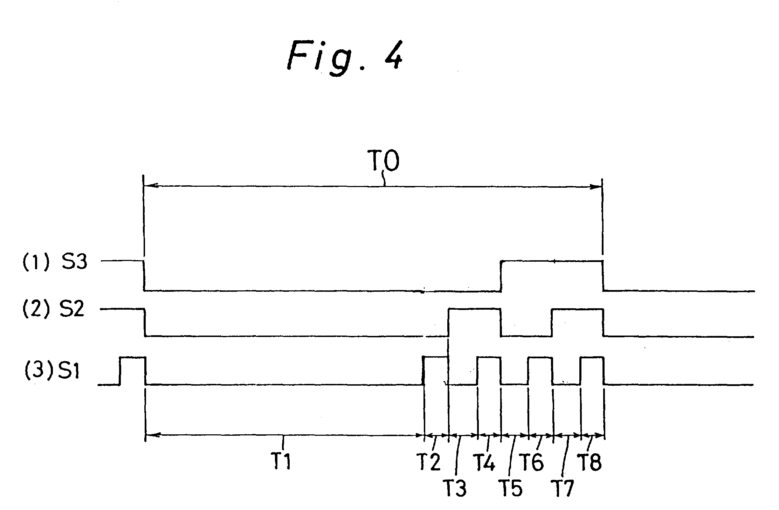

Fig. 4 is a time chart explaining the motion of this example of embodiment. The motion of this example of embodiment will be described with reference to Fig. 4. The main controller 19 outputs the selective signals S1 to S3 which vary as indicated in Fig. 4 (1) to Fig. 4 (3) with the pre-determined reading cycle T0 indicated in Fig. 4. The correspondence between the combination of levels of selective signals S1 to S3 and the selective motion of the selector 25 is as shown in Table 1 hereunder, for example.

**Table 1**

| Selective signal | | | Selected input signal |
|---|---|---|---|
| S1 | S2 | S3 | |
| L | L | L | Image signal |
| H | | | Thermistor temperature signal |
| L | H | | Sensor signal SE1 |
| H | | | Sensor signal SE2 |
| L | L | H | Sensor signal SE3 |
| H | | | Sensor signal SE4 |
| L | H | | Sensor signal SE5 |
| H | | | Sensor signal SE6 |

Namely, during the period T1 of Fig. 4, the selector 25 selects the reading image sensor 12 and the image signals are given to the A/D converter 29 for conversion into digital signals and, after processing for binary expression in the binary circuit for reading data 30, outputted at the communication control unit 17, for example. During the periods T2 to T8 of Fig. 4, the temperature signals and sensor signals SE1 to SE6 from the thermal head thermistor 20 and various sensors constituting the detecting means 24 are selected one after another as shown in Table 1, and the sensor signals SE1 to SE6 are converted into digital signals by the A/D converter 29.

The selective signals S1 to S3 inputted in the selector 25 at that time are also inputted in the decoder 31, and one corresponding circuit of the latch circuits 30 is selected by the decoder 31 to latch and output the digital signals from the A/D converter 29 as mentioned above.

As described so far, the present example of embodiment provides for the use of a single A/D converter 29 to convert analog signals from the reading image sensor 12, the thermal head thermistor 20 and various sensors constituting the detecting means 24 into digital signals. Therefore, it not only enables miniaturization of the construction by reducing the number of parts used but also promotes further miniaturization of the construction by reducing the circuits for processing analog signals which are rather difficult to be integrated, because of the fact that the construction to be reduced is the circuit for processing analog signals.

## Claims

1. A facsimile communication apparatus (11) comprising
- reading means (12) for optically reading a document;
- recording means (14) for making records on a recording medium based on image data received from a telephone network (16);
- detecting means (24) for taking out detecting signals of analog quantity by detecting the operating state of the facsimile communication apparatus (11) including the recording condition of the recording means (14, 20);
- a single analog/digital conversion means (29) for converting analog signals into digital signals: and
- selective connection means (25) for switching and connecting either the reading means (12), the detecting means (24) or the recording means to the analog/digital conversion means (29) in a sequential order,
**characterized by** providing
- a plural number of detecting means (24); and
- control means (19) connected to said selective connection means (25) for automatically and sequentially selecting said reading means (12), said recording means (20) and said plural number of detecting means (24) in a predetermined order and within a predetermined reading cycle (T₀) which includes the time periods of converting by said analog/digital conversion means (29) analog image signals read by said reading means (12), a temperature signal from said recording means (20) and various signals from said plural detecting means (24) into digital signals, said control means (19) controlling said connection means (25) so that the period (T₁) given to said reading means (12) is different from the period (T₂-T₈) respectively given to each of said recording means (20) and said plural detecting means (24).

2. The facsimile communication apparatus according to claim 1, wherein said control means (19) is controlling said selective connection means (25) in time division manner by supplying thereto selective signals (S₁, S₂, S₃) varying within a predetermined reading cycle (T₀) and the selective operation of said selective connection means (25) is corresponding to a combination of levels of said selective signals (S₁, S₂, S₃).

3. The facsimile communication apparatus according to claim 1 or 2. wherein said control means (25) generates said selective signals (S1, S2, S3 in Fig. 4 and in Table I on page 9) so that within said predetermined reading cycle (T₀) a relatively long period (T₁) for switching and connecting said reading means (12) is immediately followed by relative short periods (T₂ to T₈) each for sequentially switching and connecting each of said recording means (20) and said plural detecting means (24).

4. The facsimile communication apparatus according to claim 2 or 3, wherein latch circuits (30) are provided to latch each of the digital output signals of said single analog/digital conversion means (29), and the latching operation of each of said latch circuits (30) is controlled by decoding said selective signals (S₁, S₂, S₃) via a decoder (31) to which said selective signals (S₁, S₂, S₃) are supplied and which, at its output, controls said latch circuits (30).

## Patentansprüche

1. Faksimileübertragungsgerät (11) mit:
- einer Leseeinrichtung (12) zum optischen Lesen einer Vorlage,
- einer Aufzeichnungseinrichtung (14) zum Durchführen von Aufzeichnungen auf einem Aufzeichnungsmedium aufgrund von Bilddaten, die von einem Telefonnetz (16) empfangen sind,
- einer Detektoreinrichtung (24) zum Herausnehmen von Detektionssignalen einer analogen Größe durch Detektieren des Betriebszustandes des Faksimileübertragungsgerätes (11) einschließlich des Aufzeichnungszustandes der Aufzeichnungseinrichtung (14, 20),
- einer einzigen Analog/Digital-Umsetzungseinrichtung (29) zum Umsetzen analoger Signale in digitale Signale und
- einer selektiven Verbindungseinrichtung (25) zum Schalten und Verbinden entweder der Leseeinrichtung (12), der Detektoreinrichtung (24) oder der Aufzeichnungseinrichtung zu der Analog/Digital-Umsetzungseinrichtung (29) in einer sequentiellen Reihenfolge,
**gekennzeichnet durch**
- mehrere Detektoreinrichtungen (24) und
- eine Steuereinrichtung (19), die mit der selektiven Verbindungseinrichtung (25) verbunden ist, um automatisch und sequentiell die Leseeinrichtung (12), die Aufzeichnungseinrichtung (20) und die mehreren Detektoreinrichtungen (24) in einer vorbestimmten Reihenfolge und innerhalb eines vorbestimmten Lesezyklus (T₀) zu wählen, der die Zeitdauern des Umsetzens mittels der Analog/Digital-Umsetzungseinrichtung (29) der durch die Leseeinrichtung (12) gelesenen analogen Bildsignale, eines Temperatursignales von der Aufzeichnungseinrichtung (20) und verschiedener Signale von den mehreren Detektoreinrichtungen (24) in digitale Signale umfaßt, wobei die Steuereinrichtung (19) die Verbindungseinrichtung (25) so steuert, daß die für die Leseeinrichtung (12) gegebene Zeitdauer (T₁) verschieden von jeweils der Zeitdauer (T₂-T₈) ist, die für jede der Aufzeichnungseinrichtung (20) und der mehreren Detektoreinrichtungen (24) gegeben ist.

2. Faksimileübertragungsgerät nach Anspruch 1, bei dem die Steuereinrichtung (19) die selektive Verbindungseinrichtung (25) in Zeitteilungsweise steuert, indem dort selektive Signale (S₁, S₂, S₃) eingespeist sind, die sich innerhalb eines vorbestimmten Lesezyklus (T₀) verändern, und indem der selektive Betrieb der selektiven Verbindungseinrichtung (25) einer Kombination von Pegeln der selektiven Signale (S₁, S₂, S₃) entspricht.

3. Faksimileübertragungsgerät nach Anspruch 1 oder 2, bei dem die Steuereinrichtung (25) die selektiven Signale (S1, S2, S3 in Fig. 4 und in Tabelle I auf Seite 7) so erzeugt, daß innerhalb des vorbestimmten Lesezyklus (T₀) eine relativ lange Zeitdauer (T₁) zum Schalten und Verbinden der Leseeinrichtung (12) unmittelbar durch relativ kurze Zeitdauern (T₂ bis T₈) jeweils zum selektiven Schalten und Verbinden jeder der Aufzeichnungseinrichtung (20) und der mehreren Detektoreinrichtungen (24) gefolgt ist.

4. Faksimileübertragungsgerät nach Anspruch 2 oder 3, bei dem Verriegelungsschaltungen (30) vorgesehen sind, um jedes der digitalen Ausgangssignale der einzigen Analog/Digital-Umsetzungseinrichtung (29) zu verriegeln, wobei der Verriegelungsbetrieb von jeder der Verriegelungsschaltungen (30) durch Dekodieren der selektiven Signale (S₁, S₂, S₃) über einen Dekodierer (31) gesteuert ist, zu dem die selektiven Signale (S₁, S₂, S₃) gespeist sind und der an seinem Ausgang die Verriegelungsschaltungen (30) steuert.

## Revendications

1. Appareil de communication par télécopie (11) comprenant :
- un moyen de lecture (12) destiné à la lecture optique d'un document ;
- un moyen d'enregistrement (14) destiné à effectuer des enregistrements sur un support d'enregistrement en fonction des données d'image provenant d'un réseau téléphonique (16) ;
- un moyen de détection (24) destiné à extraire des signaux de détection sous forme de valeurs analogiques en détectant l'état de fonctionnement de l'appareil de communication par télécopie (11) incluant les conditions d'enregistrement du moyen d'enregistrement (14, 20) ;
- un moyen unique de conversion analogique-numérique (29) destiné à convertir des signaux analogiques en signaux numériques ; et
- un moyen de connexion sélectif (25) destiné à commuter et connecter le moyen de lecture (12), le moyen de détection (24) ou le moyen d'enregistrement au moyen de conversion analogique-numérique (29) selon un ordre séquentiel,
caractérisé par l'existence
- d'une pluralité de moyens de détection (24) ; et
- un moyen de commande (19) connecté audit moyen de connexion sélectif (25) pour sélectionner automatiquement et dans l'ordre ledit moyen de lecture (12), ledit moyen d'enregistrement (20) et ladite pluralité de moyens de détection (24) selon un ordre prédéterminé et au cours d'un cycle de lecture prédéterminé (T₀) incluant les périodes de conversion par ledit moyen de conversion analogique-numérique (29) des signaux d'image analogiques lus par ledit moyen de lecture (12), d'un signal de température provenant dudit moyen d'enregistrement (20) et de différents signaux provenant de ladite pluralité de moyens de détection (24) en signaux numériques, ledit moyen de commande (19) commandant ledit moyen de connexion (25) de telle manière que la période (T₁) affectée audit moyen de lecture (12) est différente de la période (T₂ -T₈) respectivement affectée à chacun desdits moyens d'enregistrement (20) et à ladite pluralité de moyens de détection (24).

2. Appareil de communication par télécopie selon la revendication 1, dans lequel ledit moyen de commande (19) commande ledit moyen de connexion sélectif (25) par répartition temporelle en lui appliquant des signaux sélectifs (S₁, S₂, S₃) variant selon un cycle de lecture prédéterminé (T₀) et l'opération de sélection dudit moyen de connexion sélectif (25) correspond à une combinaison de niveaux desdits signaux sélectifs (S₁, S₂, S₃).

3. Appareil de communication par télécopie selon la revendication 1 ou 2, dans lequel ledit moyen de commande (25) génère lesdits signaux sélectifs (S₁, S₂, S₃ de la figure 4 et du tableau I de la page 9) de sorte que, au cours dudit cycle de lecture prédéterminé (T₀), une période de durée relativement longue (T₁) destinée à commuter et connecter ledit moyen de lecture (12) est immédiatement suivie de périodes de durées relativement courtes (T₂ à T₈), chacune d'elles servant à commuter et connecter consécutivement chacun desdits moyens d'enregistrement (20) et de ladite pluralité de moyens de détection (24).

4. Appareil de communication par télécopie selon la revendication 2 ou 3, dans lequel des circuits de verrouillage (30) sont prévus pour verrouiller chacun des signaux de sortie numériques dudit moyen de conversion analogique-numérique unique (29), et l'opération de verrouillage de chacun des circuits de verrouillage (30) est commandée en décodant lesdits signaux sélectifs (S₁, S₂, S₃) par le biais d'un décodeur (31) auquel sont appliqués lesdits signaux sélectifs (S₁, S₂, S₃) et qui, en sortie, commande lesdits circuits de verrouillage (30).
